(19) Europäisches Patentamt
European Patent Office
Office européen des brevets

(11) **EP 2 650 385 A1**

(12) **EUROPÄISCHE PATENTANMELDUNG**

(43) Veröffentlichungstag:
**16.10.2013 Patentblatt 2013/42**

(51) Int Cl.:
**C21B 13/14** *(2006.01)*    **C21B 13/00** *(2006.01)*

(21) Anmeldenummer: **12163953.8**

(22) Anmeldetag: **12.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens VAI Metals Technologies GmbH**
**4031 Linz (AT)**

(72) Erfinder: **Millner, Robert**
**3382 Loosdorf (AT)**

(74) Vertreter: **Maier, Daniel Oliver**
**Siemens AG**
**Postfach 22 16 34**
**80506 München (DE)**

(54) **Verfahren und Vorrichtung zur Herstellung von flüssigem Roheisen und/oder von Eisenschwamm**

(57) Verfahren und Vorrichtung zur Herstellung von flüssigem Roheisen und/oder von Eisenschwamm, bei dem eine erste Teilmenge eines Exportgases einer Anlage zur Herstellung von flüssigem Roheisen (1) als Edukt zur Herstellung eines Reduktionsgases verwendet wird. Eine zweite Teilmenge des Exportgases wird zumindest zum Teil unter Verbrennung mit sauerstoffhaltigem Gas zur Erzeugung von Dampf in einer Dampferzeugungsanlage (10) verwendet. In der Dampferzeugungsanlage (10) erzeugter Hochdruck-Dampf wird genutzt zur Erfüllung zumindest einer Aufgabe

- Antrieb zumindest einer Stromerzeugungs-Dampfturbine (12),
- Antrieb einer Antriebs-Dampfturbine (14),
- Nutzung bei der Herstellung des Reduktionsgases in zumindest einem CO-Shift-Reaktor (4). Dabei kann in der Dampferzeugungsanlage (10) und/oder in Stromerzeugungs-Dampfturbinen (12) und/oder in Antriebs-Dampfturbinen (14) erzeugter Dampf genutzt wird zur Erfüllung zumindest einer Aufgabe aus
- Nutzung in einem CO-Shift-Reaktor (4),
-Nutzung in $CO_2$-Entfernungsanlagen zur Entfernung von $CO_2$.

FIG 1

EP 2 650 385 A1

**Beschreibung**

Gebiet der Technik

Die vorliegende Anmeldung betrifft ein Verfahren und eine Vorrichtung zur Herstellung von flüssigem Roheisen und/oder von Eisenschwamm, bei dem eine erste Teilmenge eines Exportgases einer Anlage zur Herstellung von flüssigem Roheisen als Edukt zur Herstellung eines Reduktionsgases für eine Direktreduktionsanlage zur Herstellung von Eisenschwamm verwendet wird, wobei bei dieser Herstellung des Reduktionsgases zumindest teilweise Umwandlung von CO und $H_2O$ in $H_2$ und $CO_2$ erfolgt,

Stand der Technik

In Verbundanlagen zur Herstellung von flüssigem Roheisen und/oder von Eisenschwamm wird oft Exportgas aus einer Anlage zur Herstellung von flüssigem Roheisen in eine Direktreduktionsanlage zur Herstellung von Eisenschwamm geführt, um dort als Edukt für die Herstellung eines Reduktionsgases für die Herstellung des Eisenschwammes genutzt zu werden. Zur Herstellung des Reduktionsgases werden auch andere Edukte wie beispielsweise Topgas aus der Direktreduktionsanlage verwendet. Zur Herstellung des in die Direktreduktionsanlage eingeleiteten Reduktionsgases müssen an den einzelnen Edukten sowie den aus Edukten hergestellten Gasmischungen eine Vielzahl von Kompressions-, Wasch- und Erhitzungsvorgängen durchgeführt werden, sowie zur Erhöhung der Reduktionskraft CO2 und H2O entfernt werden.
Solche Behandlungsschritte zur Herstellung des Reduktionsgases für die Direktreduktionsanlage benötigen viel Energie, die oft mittels Dampf übertragen wird. Die Herstellung des benötigten Dampfes geschieht meist kostenaufwändig aus Primärenergieträgern.

Zusammenfassung der Erfindung

Technische Aufgabe

Es ist die Aufgabe der vorliegenden Erfindung, ein Verfahren und eine Vorrichtung bereitzustellen, in denen der benötigte Dampf durch Nutzung des Exportgases der Anlage zur Herstellung von flüssigem Roheisen erzeugt wird.

Technische Lösung

Diese Aufgabe wird gelöst durch ein Verfahren zur Herstellung von flüssigem Roheisen und/oder von Eisenschwamm, bei dem
eine erste Teilmenge eines
Exportgases einer Anlage zur Herstellung von flüssigem Roheisen als Edukt zur Herstellung eines Reduktionsgases für eine

Direktreduktionsanlage zur Herstellung von Eisenschwamm verwendet wird, wobei bei dieser Herstellung des Reduktionsgases zumindest teilweise Umwandlung von CO und $H_2O$ in $H_2$ und $CO_2$ erfolgt,
[0006] Das erfindungsgemäße Verfahren ist dadurch gekennzeichnet, dass
eine zweite Teilmenge des Exportgases der Anlage zur Herstellung von flüssigem Roheisen
zumindest zum Teil unter Verbrennung mit sauerstoffhaltigem Gas zur Erzeugung von Dampf in einer Dampferzeugungsanlage verwendet wird,
wobei in der Dampferzeugungsanlage erzeugter Hochdruck-Dampf genutzt wird zur Erfüllung zumindest einer Aufgabe aus der Gruppe von Aufgaben bestehend aus

- Antrieb zumindest einer Stromerzeugungs-Dampfturbine zur Stromerzeugung,
- Antrieb von mechanischem Equipment über zumindest eine Antriebs-Dampfturbine,
- Nutzung bei der Umwandlung von CO und $H_2O$ in $H_2$ und $CO_2$ bei der Herstellung des Reduktionsgases in zumindest einem CO-Shift-Reaktor durch Erhöhung des Wasserdampfgehaltes; und/oder
  wobei in
- der Dampferzeugungsanlage und/oder
- in Stromerzeugungs-Dampfturbinen und/oder
- in Antriebs-Dampfturbinen erzeugter Niederdruck- und/oder Mitteldruck-Dampf genutzt wird zur Erfüllung zumindest einer Aufgabe aus der Gruppe von Aufgaben bestehend aus
- Nutzung bei der Umwandlung von CO und $H_2O$ in $H_2$ und $CO_2$ bei der Herstellung des Reduktionsgases in zumindest einem CO-Shift-Reaktor durch Erhöhung des Wasserdampfgehaltes,
- Nutzung in $CO_2$-Entfernungsanlagen zur Entfernung von $CO_2$ aus bei der Herstellung von Eisenschwamm in der Direktreduktionsanlage verwendeten Gasen.

Die Anlage zur Herstellung von flüssigem Roheisen kann beispielsweise sein eine Schmelzreduktionsanlage basierend auf stückigen Oxidmaterialien (Pellets/Stückerz/Sinter) oder Feinerzen, ein Einschmelzvergaser, oder ein mit Sauerstoff betriebener Hochofen.
Exportgas kann selbstverständlich auch aus mehreren Anlagen zur Herstellung von flüssigem Roheisen stammen; in der Formulierung "eines Exportgases einer Anlage zur Herstellung von Roheisen" ist eines/einer nicht als Zahlwort, sondern als unbestimmter Artikel zu verstehen.
Unter dem Begriff Exportgas einer Anlage zur Herstellung von flüssigem Roheisen ist dabei zu verstehen ein Gas, das nach Reinigung von Roheisenerzeugungs-Topgas aus der Anlage zur Herstellung von flüssigem Roheisen abgezogen wird. Roheisenerzeugungs-Topgas ist Gas, das nach erfolgter Nutzung zur Herstellung von flüssigem Roheisen aus den Reduktionsaggregaten der Anlage zur Herstellung von flüssigem Roheisen austritt. Zum Roheisenerzeugungs-Topgas kann auch Überschussgas aus einem Einschmelzvergaser einer Anlage zur Herstellung von flüssigem Roheisen zugemischt werden; auch eine solche Mischung ist nach Reinigung als Exportgas bezeichnet.

Beim Überschussgas handelt es sich um den Teil des aus dem Einschmelzvergasers austretenden Gases - auch genannt Generatorgas -, welcher über Mengenregelung zur Erhaltung des Systemdrucks des Einschmelzvergasers genutzt wird - und nach Reinigung sowie Kühlung zum Topgas zugemischt werden kann.

Unter dem Begriff Eisenschwamm ist dabei zu verstehen ein poröses Reduktionsprodukt aus Eisenerzen. Die Reduktion des Eisenerzes mit den Gasen Kohlenstoffmonoxid und Wasserstoff ergibt ein schwammartiges Produkt mit großem Porenvolumen.

Unter dem Begriff Direktreduktion ist dabei zu verstehen die Erzeugung von Eisenschwamm aus Oxidmaterialien durch indirekte Reduktion mittels eines Reduktionsgases.

Die Dampferzeugungsanlage kann beispielsweise sein ein Kessel zur Verbrennung von Brennstoffen und Rückgewinnung der Abwärme zur Erzeugung von Dampf und/oder Heißwasser über Wärmetausch.

Unter dem Begriff Hochdruck-Dampf ist dabei zu verstehen Dampf mit einem Druck von 17.5 $bar_g$ und darüber.

Unter dem Begriff Mitteldruck-Dampf ist dabei zu verstehen Dampf mit einem Druck von 3.5 bis 17.5 $bar_g$.

Unter dem Begriff Niederdruck-Dampf ist dabei zu verstehen Dampf mit einem Druck von bis zu 3.5 $bar_g$.

Die Stromerzeugungs-Dampfturbine zur Stromerzeugung kann eine Gegendruck-Dampfturbine oder eine Kondensationsdampfturbine sein. Die Kondensationsdampfturbine kann auch mit einer Entnahme von Mittel- oder Niederdruckdampf ausgestattet sein.

Die Antriebs-Dampfturbine kann eine Gegendruck-Dampfturbine oder eine Kondensationsdampfturbine sein. Die Kondensationsdampfturbine kann auch mit einer Entnahme von Mittel- oder Niederdruckdampf ausgestattet sein.

Bei dem erfindungsgemäßen Verfahren wird eine erste Teilmenge eines Exportgases einer Anlage zur Herstellung von flüssigem Roheisen als Edukt zur Herstellung eines Reduktionsgases für eine Direktreduktionsanlage zur Herstellung von Eisenschwamm verwendet. Zur Herstellung eines Reduktionsgases können auch noch andere Edukte verwendet werden, die der ersten Teilmenge des Exportgases beispielsweise zugemischt werden.

Bei der Herstellung des Reduktionsgases erfolgt zumindest teilweise Umwandlung von CO und $H_2O$ in $H_2$ und $CO_2$, wobei das CO aus dem oder den Edukten stammt. Die Umwandlung wird in sogenannten CO- Shift-Reaktoren, welche mit einem oder mehreren Katalysatoren gefüllt sind, durchgeführt.

Vorteilhafte Wirkungen der Erfindung

Erfindungsgemäß wird eine zweite Teilmenge des Exportgases der Anlage zur Herstellung von flüssigem Roheisen zumindest zum Teil unter Verbrennung mit sauerstoffhaltigem Gas zur Erzeugung von Dampf in einer Dampferzeugungsanlage verwendet. Bei dem Dampf kann es sich um Hochdruck-Dampf, Mitteldruck-Dampf, Niederdruck-Dampf handeln.

In der Dampferzeugungsanlage erzeugter Hochdruck-Dampf wird genutzt zur Erfüllung zumindest einer Aufgabe aus der Gruppe von Aufgaben bestehend aus

- Antrieb zumindest einer Stromerzeugungs-Dampfturbine zur Stromerzeugung,
- Antrieb von mechanischem Equipment über zumindest eine Antriebs-Dampfturbine,
- Nutzung bei der Umwandlung von CO und $H_2O$ in $H_2$ und $CO_2$ bei der Herstellung des Reduktionsgases in zumindest einem CO-Shift-Reaktor durch Erhöhung des Wasserdampfgehaltes;

Das CO Kohlenmonoxid wird zumindest teilweise umgewandelt, es kann auch das gesamte CO umgewandelt werden. Es kann ein CO-Shift-Reaktor oder mehrere CO-Shift-Reaktoren zum Einsatz kommen. Bei der Nutzung des Dampfes bei der Umwandlung von CO und $H_2O$ in $H_2$ und $CO_2$ bei der Herstellung des Reduktionsgases in CO-Shift-Reaktoren durch Erhöhung des Wasserdampfgehaltes kann der Hochdruck-Dampf dem im CO-Shift-Reaktor zu behandelnden Gas vor dessen Eintritt in den CO-Shift-Reaktor zugegeben werden, oder er kann in den CO-Shift-Reaktor eingegeben werden. Im letzteren Fall wird er also während des Ablaufs der Shift-Reaktion zugegeben, im ersten Fall vor Ablauf der Shift-Reaktion

$$CO + H_2O \rightarrow CO_2 + H_2$$

Unter CO-Shift-Reaktor ist ein Reaktor zu verstehen, in dem eine Shift-Reaktion abläuft.

Ein Teil des für die Shift-Reaktion erforderlichen Wasserdampfgehaltes kann auch mittels eines Sättigers vor der Dampfzugabe erzeugt werden. In einem Sättiger wird der Wasserdampfgehalt des Prozessgases - im vorliegenden Fall des Exportgases - durch direkten Kontakt mit heißem, unter Druck stehendem Wasser bis zur Wassersättigung - beim jeweiligen Druck und der jeweiligen Temperatur des Prozessgases am Sättigeraustritt - erhöht. Durch die Nutzung von heißem Wasser im Sättiger wird gleichzeitig auch die Temperatur des Prozessgases auf eine knapp unter dem heißen Wasser liegende Temperatur erwärmt.

Erfindungsgemäß wird gegebenenfalls auch in der Dampferzeugungsanlage und/oder

- in Stromerzeugungs-Dampfturbinen und/oder
- in Antriebs-Dampfturbinen erzeugter Niederdruck- und/oder Mitteldruck-Dampf genutzt zur Erfüllung zumindest einer Aufgabe aus der Gruppe von Aufgaben bestehend aus
- Nutzung bei der Umwandlung von CO und $H_2O$ in $H_2$ und $CO_2$ in zumindest einem CO-Shift-Reaktor durch Erhöhung des Wasserdampfgehaltes bei der Herstellung des Reduktionsgases;
- Nutzung in $CO_2$-Entfernungsanlagen zur Entfernung von $CO_2$ aus bei der Herstellung von flüssigem Roheisen in einer Anlage zur Herstellung von flüssigem Roheisen verwendeten Gasen und/oder bei der Herstellung von Eisenschwamm in der Direktreduktionsanlage verwendeten Gasen.

Das CO Kohlenmonoxid wird zumindest teilweise umgewandelt, es kann auch das gesamte CO umgewandelt werden. Es kann ein CO-Shift-Reaktor oder mehrere CO-Shift-Reaktoren zum Einsatz kommen. Bei der Nutzung bei der Umwandlung von CO und $H_2O$ in $H_2$ und $CO_2$ in einem CO-Shift-Reaktor bei der Herstellung des Reduktionsgases kann der Niederdruck- und/oder Mitteldruck-Dampf zur Erhöhung des Wasserdampfgehaltes dem im CO-Shift-Reaktor zu behandelndem Gas vor dessen Eintritt in den CO-Shift-Reaktor zugegeben werden, oder er kann in den CO-Shift-Reaktor eingegeben werden. Im letzteren Fall wird Niederdruck- und/oder Mitteldruck-Dampf also während des Ablaufs der Shift-Reaktion zugegeben, im ersten Fall vor Ablauf der Shift-Reaktion.

Das aus dem CO- Shift- Reaktor austretende Gas enthält neben $H_2$/CO auch noch einen hohen Wasserdampfgehalt- bedingt durch erforderlichen Wasserdampfüberschuss- und einen hohen $CO_2$ Gehalt- bedingt durch zusätzliche $CO_2$ Erzeugung über das Wasserdampfgleichgewicht $CO+H_2O \rightarrow CO_2 + H_2O$ -, und hat aufgrund der exothermen CO- Shift Reaktion eine gegenüber der Eintrittstemperatur des Exportgases um etwa 100 bis 200°C höhere Austrittstemperatur von etwa 400- 500°C. Bevorzugt erfolgt zumindest noch eine $CO_2$-Entfernung, um das aus dem CO- Shift- Reaktor austretende Gas- im Rahmen dieser Anmeldung auch Shiftgas genannt- zum Reduktionsgas zu machen.

Eine Nutzung in $CO_2$-Entfernungsanlagen erfolgt beispielsweise durch Nutzung im Desorber einer $CO_2$-Entfernungsanlage zur Aufwärmung der Absorptionsflüssigkeit und Austreiben des in der Absorptionsflüssigkeit gebundenen/gelösten $CO_2$.

Die bei der Herstellung von flüssigem Roheisen in einer Anlage zur Herstellung von flüssigem Roheisen verwendeten Gase beziehungsweise bei der Herstellung von Eisenschwamm in der Direktreduktionsanlage verwendeten Gase sind beispielsweise Exportgas einer Anlage zur Herstellung von flüssigem Roheisen, aus dem Exportgas gewonnenes Zwischenprodukt bei der Herstellung von Reduktionsgas - beispielsweise Gas, das aus dem CO-Shift-Reaktor austritt -, oder Exportgas, das nicht in einen CO-Shift-Reaktor eingeleitet wird, sondern nach $CO_2$-Entfernung zur Herstellung des Reduktionsgases mit anderen Gasen vermischt wird; oder Topgas aus der Direktreduktionsanlage,.

Der Niederdruck- und/oder Mitteldruck-Dampf kann erfindungsgemäß in $CO_2$-Entfernungsanlagen zur Entfernung von $CO_2$ aus solchen Gasen genutzt werden.

Auf diese Weise wird im erfindungsgemäßen Verfahren die im Exportgas enthaltene Energie genutzt, um über Dampferzeugung Energie an andere energieverbrauchende Verfahrensschritte zu übertragen. Einsatz von Primärenergieträgern zur Energieversorgung dieser Verfahrensschritte kann damit vermindert beziehungsweise vermieden werden.

Der in Stromerzeugungs-Dampfturbinen und/oder in Antriebs-Dampfturbinen erzeugte Niederdruck- und/oder Mitteldruck-Dampf wird beispielsweise am Austritt der Gegendruck-Dampfturbine

oder

an einer Zwischenstufe einer Kondensationsdampfturbine

der Stromerzeugungs-Dampfturbine oder der Antriebs-Dampfturbine entnommen. Die erfindungsgemäße Nutzung dieses Niederdruck- und/oder Mitteldruck-Dampfes ist vorteilhaft, weil die Energieeffizienz des gesamten Verfahrens gesteigert wird.

Nach einer bevorzugten Ausführungsform wird die zweite Teilmenge des Exportgases der Anlage zur Herstellung von flüssigem Roheisen zumindest zum Teil in einem Gasspeicher, bevorzugt einem Niederdruckgasspeicher gesammelt, und aus dem Gasspeicher, bevorzugt dem Niederdruckgasspeicher, entnommenes Gas unter Verbrennung mit sauerstoffhaltigem Gas zur Erzeugung von Dampf in der Dampferzeugungsanlage verwendet.

Unter dem Begriff Niederdruckgasspeicher ist dabei zu verstehen ein Gasspeicher mit einem Betriebsdruck unterhalb von 0,5 $bar_g$, beispielsweise. mit Membran-oder Ölabdichtung.

Bei dieser Ausführungsform wird also die zweite Teilmenge des Exportgases der Anlage zur Herstellung von flüssigem Roheisen in einem Gasspeicher, bevorzugt Niederdruckgasspeicher, gesammelt. Es können auch andere Gase in den Gasspeicher, bevorzugt Niederdruckgasspeicher, eingeleitet werden.

Aus dem Gasspeicher, bevorzugt Niederdruckgasspeicher, entnommenes Gas wird zumindest zum Teil unter Verbrennung mit sauerstoffhaltigem Gas zur Erzeugung von Dampf in der Dampferzeugungsanlage verwendet.

Nach einer bevorzugten Ausführungsform wird in den Gasspeicher, bevorzugt Niederdruckgasspeicher, auch zumindest ein Gas aus der Gruppe bestehend aus

- Tailgas aus einer der CO2-Entfernungsanlagen zur Entfernung von $CO_2$ aus bei der Herstellung von flüssigem Roheisen in einer Anlage zur Herstellung von flüssigem Roheisen verwendeten Gasen und/oder bei der Herstellung von Eisenschwamm in der Direktreduktionsanlage verwendeten Gasen,
- Topgas aus der Direktreduktionsanlage

eingegeben.

Diese Gase besitzen noch einen Brennwert, der bei der Dampferzeugung aus dem aus dem Gasspeicher, bevorzugt dem Niederdruckgasspeicher, entnommenen Gas noch genutzt werden kann. Dadurch wird das erfindungsgemäße Verfahren energieeffizienter.

Nach einer bevorzugten Ausführungsform wird die zweite Teilmenge des Exportgases und/oder in dem Gasspeicher, bevorzugt Niederdruckgasspeicher, gespeichertes Gas nach Entnahme aus dem Gasspeicher, bevorzugt Niederdruckgasspeicher,
genutzt zur Erfüllung zumindest einer Aufgabe aus der Gruppe von Aufgaben bestehend aus

- Rohstofftrocknung von bei dem Verfahren eingesetzten Rohstoffen
- Erhitzung des Reduktionsgases durch indirekten Wärmeaustausch nach Verbrennung.

Diese Nutzung des Energieinhaltes der zweiten Teilmenge des Exportgases beziehungsweise des aus dem aus dem Gasspeicher, bevorzugt Niederdruckgasspeicher, entnommenen Gases macht das erfindungsgemäße Verfahren energieeffizienter.

Die Rohstofftrocknung kann beispielsweise erfolgen durch direkten oder indirekten Wärmeaustausch nach Verbrennung.

Bei dem erfindungsgemäßen Verfahren beträgt die erste Teilmenge des Exportgases zumindest 10 vol%, bevorzugt 80 vol%, bis 95 vol%. Dieser Bereich deshalb, weil einerseits ein minimaler Heizwert des aus dem Gasspeicher, bevorzugt Niederdruckgasspeicher, entnommenen Gases sichergestellt werden muss, und andererseits Mengenschwankungen im Exportgas, welche überwiegend durch Zumischung von Überschussgas zum Roheisenerzeugungs-Topgas entstehen, geregelt werden müssen, um einen konstanten Saugdruck für Exportgaskompressen sicher zu stellen.

Bei dem erfindungsgemäßen Verfahren beträgt die zweite Teilmenge des Exportgases zumindest 5 vol%, bevorzugt 20 vol%, bis 90 vol%, da einerseits ein minimaler Heizwert des aus dem Gasspeicher, bevorzugt Niederdruckgasspeicher, entnommenen Gases sichergestellt werden muss und andererseits Mengenschwankungen im Exportgas, welche überwiegend durch Zumischung von Überschussgases zum Roheisenerzeugungs-Topgas entstehen, geregelt werden müssen, um einen konstanten Saugdruck für Exportgaskompressoren sicher zu stellen.

Der Heizwert des aus dem Gasspeicher, bevorzugt Niederdruckgasspeicher, entnommenen Gases sollte bevorzugt bei größer 2500 kJ/Nm$^3$, besonders bevorzugt bei größer 3200 kJ/Nm$^3$ liegen.

Der Heizwert der zweiten Teilmenge des Exportgases beträgt bevorzugt circa 7500 bis 8500 kJ/Nm$^3$.

Nach einer bevorzugten Ausführungsform wird Abwärme aus zumindest einer der Wärmeträger aus der Gruppe bestehend aus

- aus dem CO-Shift Reaktor austretendes Gas
- Topgas aus der Direktreduktionsanlage;
- bei der Erhitzung des Reduktionsgases durch indirekten Wärmeaustausch bei Verbrennung anfallendes Rauchgas;
- in der zur Durchführung der Direktreduktion eingesetzten Direktreduktionsanlage verwendetes Kühlgas;
- Roheisenerzeugungs-Topgas;
- Generatorgas und/oder Überschussgas der Anlage zur Herstellung von flüssigem Roheisen

genutzt zur Erzeugung von Dampf in einer Dampfgewinnungsanlage,
wobei in der Dampfgewinnungsanlage erzeugter Hochdruck-Dampf genutzt wird zur Erfüllung zumindest einer Aufgabe aus der Gruppe von Aufgaben bestehend aus

- Antrieb zumindest einer Stromerzeugungs-Dampfturbine zur Stromerzeugung,
- Antrieb von mechanischem Equipment über zumindest eine Antriebs-Dampfturbine,
- Nutzung bei der Umwandlung von CO und $H_2O$ in $H_2$ und $CO_2$ bei der Herstellung des Reduktionsgases in zumindest einem CO-Shift-Reaktor durch Erhöhung des Wasserdampfgehaltes;
  und/oder
  wobei in der Dampfgewinnungsanlage erzeugter Niederdruck- und/oder Mitteldruck-Dampf genutzt wird zur Erfüllung zumindest einer Aufgabe aus der Gruppe von Aufgaben bestehend aus
- Nutzung bei der Umwandlung von CO und $H_2O$ in $H_2$ und $CO_2$ bei der Herstellung des Reduktionsgases in zumindest einem CO-Shift-Reaktor durch Erhöhung des Wasserdampfgehaltes,
- Nutzung in $CO_2$-Entfernungsanlagen zur Entfernung von $CO_2$ aus bei der Herstellung von Eisenschwamm in der Direktreduktionsanlage verwendeten Gasen.

Diese Nutzung des Energieinhaltes dieser Wärmeträger macht das erfindungsgemäße Verfahren energieeffizienter

Die Dampfgewinnungsanlage kann beispielsweise sein ein Kessel zur Verbrennung von Brennstoffen und Rückgewinnung der Abwärme zur Erzeugung von Dampf und/oder Heißwasser über Wärmetausch.

Bei dem in der Dampfgewinnungsanlage erzeugten Dampf kann es sich um Hochdruck-Dampf, Mitteldruck-Dampf, Niederdruck-Dampf handeln. Roheisenerzeugungs-Topgas ist beispielsweise Topgas aus einer COREX®- oder FINEX®-Anlage, oder Gichtgas aus einem Hochofen.

Unter dem Begriff Roheisenerzeugungs-Generatorgas ist ein Gas zu verstehen, das zwecks Reduktion von oxidischen Eisenträgern in der Anlage zur Herstellung von flüssigem Roheisen hergestellt wird - beispielsweise Generatorgas einer COREX®- oder FINEX®-Anlage.

Aus dem CO-Shift Reaktor austretendem Gas kann beispielsweise in Form eines Speisewasservorwärmers Energie zur Erzeugung von Dampf in einer Dampfgewinnungsanlage entzogen werden.

Weiters betrifft die vorliegende Erfindung eine Vorrichtung zur Durchführung eines erfindungsgemäßen Verfahrens, mit einer Anlage zur Herstellung von flüssigem Roheisen,

einer Exportgasabzugsleitung zum Abzug von Exportgas aus der Anlage zur Herstellung von flüssigem Roheisen,

zumindest einem CO-Shift-Reaktor zur Umwandlung von CO und $H_2O$ in $H_2$ und $CO_2$, in welchen die Exportgasabzugsleitung mündet,

einer Direktreduktionsanlage zur Herstellung von Eisenschwamm,

eine von dem zumindest einen CO-Shift-Reaktor ausgehende Shiftgasleitung zur Zuleitung von Shiftgas zur Direktreduktionsanlage,

dadurch gekennzeichnet, dass sie umfasst

eine von der Exportgasabzugsleitung abzweigende und in eine Dampferzeugungsanlage mündende Dampfexportgaszuleitung zur Zuleitung von Exportgas in die Dampferzeugungsanlage,

wobei von der Dampferzeugungsanlage

zumindest ein Mitglied der Gruppe bestehend aus:

- Stromdampfzuleitung zur Zuleitung von Dampf in eine Stromerzeugungs-Dampfturbine,
- Antriebsdampfzuleitung zur Zuleitung von Dampf in eine Antriebs-Dampfturbine,
- Shiftdampfzuleitung zur Zuleitung von Dampf in einen CO-Shift-Reaktor
  und/oder in die Exportgasabzugsleitung,
  ausgeht,
  und/oder wobei
  von zumindest einem Mitglied der Gruppe bestehend aus
- Dampferzeugungsanlage
- Stromerzeugungs-Dampfturbine,
- Antriebs-Dampfturbine,

eine

in einen CO-Shift-Reaktor und/oder in die Exportgasabzugsleitung,

und/oder

in eine $CO_2$-Entfernungsvorrichtung zur Entfernung von

$CO_2$ aus bei der Herstellung von Eisenschwamm in der Direktreduktionsanlage verwendeten Gasen mündende
Dampfzuleitung ausgeht.

Die Dampfzuleitung ist geeignet zur Zuleitung von Dampf aus zumindest einem Mitglied der Gruppe bestehend aus

- Dampferzeugungsanlage
- Stromerzeugungs-Dampfturbine,
- Antriebs-Dampfturbine,
  in einen CO-Shift-Reaktor und/oder in die Exportgasabzugsleitung, und/oder in eine $CO_2$-Entfernungsvorrichtung zur Entfernung von $CO_2$ aus bei der Herstellung von Eisenschwamm in der Direktreduktionsanlage verwendeten Gasen.

Die von dem CO-Shift-Reaktor ausgehende Shiftgasleitung kann eine $CO_2$-Entfernungsvorrichtung enthalten, um den $CO_2$-Gehalt des aus dem CO-Shift-Reaktor austretenden Shiftgases zu vermindern. Der in die Direktreduktionsanlage mündende Teil der Shiftgasleitung kann auch Reduktionsgasleitung genannt werden; er führt das in der Direktreduktionsanlage eingesetzte Reduktionsgas, welches durch Behandlung des Shiftgases, beziehungsweise Zumischung anderer Gase zum, gegebenenfalls behandelten, Shiftgas gewonnen worden sein kann.

Nach einer bevorzugten Ausführungsform umfasst die erfindungsgemäße Vorrichtung einen Gasspeicher, bevorzugt einen Niederdruckgasspeicher, in der Dampfexportgaszuleitung.

Dabei kann der von der Exportgasabzugsleitung abzweigende und in den Gasspeicher, bevorzugt Niederdruckgasspeicher, mündende Teil der Dampfexportgaszuleitung auch Gasspeicherleitung - zur Leitung von Exportgas in den Gasspeicher, bevorzugt Niederdruckgasspeicher - genannt werden.

Dabei kann der von dem Gasspeicher, bevorzugt Niederdruckgasspeicher, ausgehende und in eine Dampferzeugungsanlage mündende Teil der Dampfexportgaszuleitung auch Speichergaszuleitung - zur Zuleitung von Gas aus dem Gasspeicher, bevorzugt Niederdruckgasspeicher, in die Dampferzeugungsanlage - genannt werden.

Nach einer bevorzugten Ausführungsform mündet in den Gasspeicher, bevorzugt Niederdruckgasspeicher, zumindest ein Mitglied der Gruppe bestehend aus

- Tailgasableitung zur Ableitung von Tailgas aus der $CO_2$-Entfernungsvorrichtung zur Entfernung von $CO_2$,
- Topgasableitung zur Ableitung von Topgas aus der Direktreduktionsanlage. Nach einer bevorzugten Ausführungsform geht von dem Gasspeicher, bevorzugt Niederdruckgasspeicher, zumindest eine Speichergasausleitung aus, die in mindestens ein Mitglied aus der Gruppe

- Vorrichtung zur Rohstofftrocknung,
- Erwärmungsvorrichtung zur Erwärmung von Reduktionsgas mündet.

Die Vorrichtung zur Rohstofftrocknung ist geeignet zur Trocknung von bei dem erfindungsgemäßen Verfahren eingesetzten Rohstoffen.

Die Erwärmungsvorrichtung zur Erwärmung von Reduktionsgas erlaubt es beispielsweise, Erhitzung des Reduktionsgases durch indirekten Wärmeaustausch nach Verbrennung durchzuführen.

Eine Speichergasausleitung ist geeignet zur Zuleitung von Gas aus dem Gasspeicher, bevorzugt Niederdruckgasspeicher, in die beiden genannten Vorrichtungen.

Nach einer bevorzugten Ausführungsform umfasst die erfindungsgemäße Vorrichtung zumindest eine Dampfgewinnungsanlage zur Erzeugung von Dampf

aus Wärme von zumindest einem der Wärmeträger aus der Gruppe bestehend aus

- aus dem CO-Shift Reaktor austretendes Gas
- Topgas aus der Direktreduktionsanlage;
- bei der Erhitzung des Reduktionsgases durch indirekten Wärmeaustausch bei Verbrennung anfallendes Rauchgas;
- in der zur Durchführung der Direktreduktion eingesetzten Direktreduktionsanlage verwendetes Kühlgas;
- Roheisenerzeugungs-Topgas;
- Generatorgas und/oder Überschussgas der Anlage zur Herstellung von flüssigem Roheisen,

wobei von der zumindest einen Dampfgewinnungsanlage

zumindest ein Mitglied der Gruppe bestehend aus:

- Stromdampfzuleitung zur Zuleitung von Dampf in eine Stromerzeugungs-Dampfturbine,
- Antriebsdampfzuleitung zur Zuleitung von Dampf in eine Antriebs-Dampfturbine,
- Shiftdampfzuleitung zur Zuleitung von Dampf in einen CO-Shift-Reaktor und/oder in die Exportgasabzugsleitung,

ausgeht,
und/oder wobei
von der Dampfgewinnungsanlage
eine
in einen CO-Shift-Reaktor und/oder in die Exportgasabzugsleitung,
und/oder
in eine $CO_2$-Entfernungsvorrichtung zur Entfernung von $CO_2$ aus bei der Herstellung von Eisenschwamm in der Direktreduktionsanlage verwendeten Gasen mündende

Dampfzuleitung ausgeht.

Es kann eine oder mehrere Dampfgewinnungsanlagen vorhanden sein. Beispielsweise kann für jeden der Wärmeträger eine spezielle Dampfgewinnungsanlage vorhanden sein; beispielsweise ein Wärmetauscher in der Topgasableitung zur Ableitung von Topgas aus der Direktreduktionsanlage.und ein anderer Wärmetauscher in einer Rauchgas führenden Leitung.

Kurze Beschreibung der Zeichnungen

Nachfolgend wird die vorliegende Erfindung anhand schematischer und beispielhafter Figuren von Ausführungsformen erläutert.

Figur 1 zeigt eine erfindungsgemäße Vorrichtung zur Herstellung von flüssigem Roheisen und Eisenschwamm.
Figur 2 zeigt einen Ausschnitt aus einer erfindungsgemäßen Vorrichtung zur Herstellung von flüssigem Roheisen und Eisenschwamm.
Figur 3 zeigt einen Ausschnitt aus einer erfindungsgemäßen Vorrichtung zur Herstellung von flüssigem Roheisen und Eisenschwamm.
Figur 4 zeigt einen Ausschnitt aus einer erfindungsgemäßen Vorrichtung zur Herstellung von flüssigem Roheisen und Eisenschwamm.
Figur 5 zeigt einen Ausschnitt aus einer erfindungsgemäßen Vorrichtung zur Herstellung von flüssigem Roheisen und Eisenschwamm.

Beschreibung der Ausführungsformen

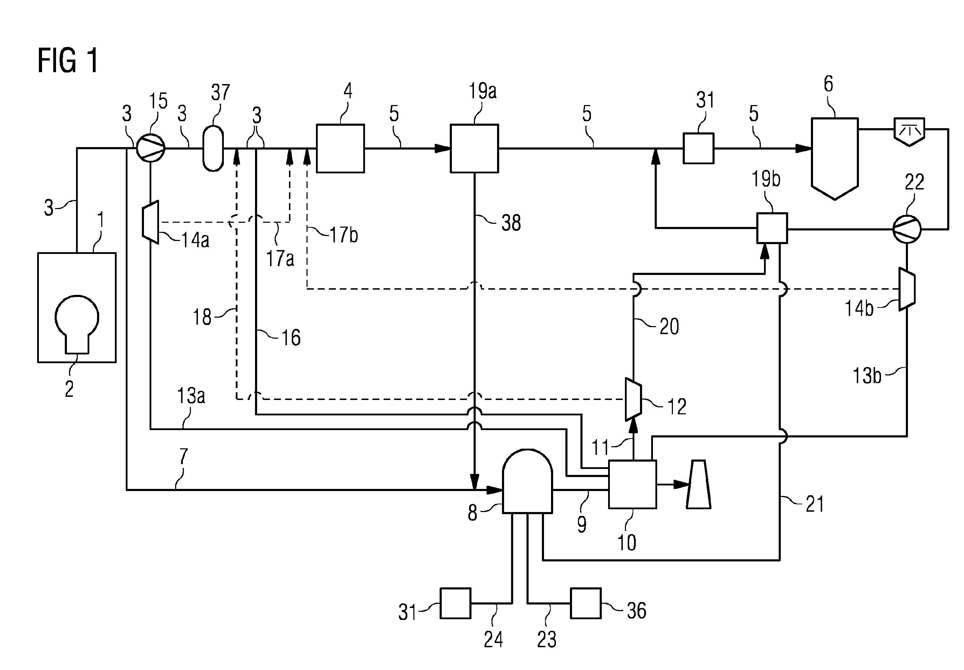

Figur 1 zeigt eine Anlage 1 zur Herstellung von flüssigem Roheisen, in diesem Fall umfassend einen Einschmelzvergaser 2. Von der Anlage 1 zur Herstellung von flüssigem Roheisen geht eine Exportgasabzugsleitung 3 zum Abzug von Exportgas aus der Anlage 1 zur Herstellung von flüssigem Roheisen aus. Auf die Darstellung von Details der Anlage 1 zur Herstellung von flüssigem Roheisen wird aus Gründen der Übersichtlichkeit verzichtet. Beispielsweise ist nicht dargestellt, wie eine Roheisenerzeugungs-Topgas aus der Anlage zur Herstellung von flüssigem Roheisen abgezogen wird oder wie dem Roheisenerzeugungs-Topgas Überschussgas aus dem Einschmelzvergaser zugemischt wird; beziehungsweise wie eine solche Mischung oder Roheisenerzeugungs-Topgas alleine gereinigt wird, bevor Exportgas abgezogen wird.

Die Exportgasabzugsleitung 3 mündet in einen CO-Shift-Reaktor 4 zur Umwandlung von CO und $H_2O$ in $H_2$ und $CO_2$. In dem CO-Shift-Reaktor 4 wird Reduktionsgas erzeugt. Von dem CO-Shift-Reaktor 4 geht eine Shiftgasleitung 5 zur Zuleitung von Reduktionsgas in eine Direktreduktionsanlage 6 zur Herstellung von Eisenschwamm aus. Die Shiftgasleitung 5 mündet in die Direktreduktionsanlage 6 zur Herstellung von Eisenschwamm. In der Shiftgasleitung 5 ist eine $CO_2$-Entfer-

nungsvorrichtung 19a zur Entfernung von $CO_2$ aus dem Shiftgas vorhanden. Von der $CO_2$-Entfernungsvorrichtung 19a zur Entfernung von $CO_2$ aus dem Shiftgas geht eine Tailgasableitung 38 aus.

Von der Exportgasabzugsleitung 3 zweigt eine Dampfexportgaszuleitung zur Zuleitung von Exportgas in die Dampferzeugungsanlage ab. In der Dampfexportgaszuleitung befindet sich ein Niederdruckgasspeicher 8. Der von der Exportgasabzugsleitung 3 abzweigende und in den Niederdruckgasspeicher 8 mündende Teil der Dampfexportgaszuleitung wird genannt Gasspeicherleitung 7 zur Leitung von Exportgas in den Niederdruckgasspeicher 8. Die Tailgasableitung 38 mündet in die Gasspeicherleitung 7.

Der von dem Niederdruckgasspeicher 8 ausgehende und in eine Dampferzeugungsanlage 10 mündende Teil der Dampfexportgaszuleitung wird Speichergaszuleitung 9 zur Zuleitung von Gas aus dem Niederdruckgasspeicher 8 in die Dampferzeugungsanlage 10 genannt.

Von der Dampferzeugungsanlage 10 gehen aus:

- Stromdampfzuleitung 11 zur Zuleitung von Dampf in eine Stromerzeugungs-Dampfturbine 12,
- Antriebsdampfzuleitungen 13a,13b zur Zuleitung von Dampf in Antriebs-Dampfturbinne 14a,14b die zum Antrieb eines Kompressors 15 und eines Kompressors 22 dient,
- Shiftdampfzuleitung 16 zur Zuleitung von Dampf in die Exportgasabzugsleitung 3 in Strömungsrichtung des Exportgases gesehen vor dem CO-Shift-Reaktor 4.

Wenn die Stromerzeugungs-Dampfturbine 12 und die Antriebsdampfturbinen 14a,14b mit der gleichen Art von Dampf angetrieben werden, könnten die Stromdampfzuleitung 11 sowie die Antriebsdampfleitungen 13a,13b selbstverständlich auch aus einer einzigen von der Dampferzeugungsanlage 8 ausgehenden Leitung abzweigen.

Von den Mitgliedern der Gruppe bestehend aus

- Stromerzeugungs-Dampfturbine 12,
- Antriebs-Dampfturbinen 14a,14b,

können - strichliert gezeichnet - in den CO-Shift-Reaktor 4 oder in die Exportgasabzugsleitung 3 mündende Dampfzuleitungen 17a,17b,18 ausgehen.

Von der Stromerzeugungs-Dampfturbine 12 geht eine in eine CO2-Entfernungsvorrichtung 19b zur Entfernung von $CO_2$ aus bei der Herstellung von Eisenschwamm in der Direktreduktionsanlage verwendeten Gasen - in diesem Fall Topgas aus der Direktreduktionsanlage nach einer Wäsche - mündende Dampfzuleitung 20 aus.

Die Dampfzuleitungen 17a, 17b, 18, 20 führen Niederdruck-Dampf oder Mitteldruck-Dampf.

Die Antriebdampfzuleitung 13a und die Shiftdampfzuleitung 16 führen Hockdruck-Dampf.

In den Niederdruckgasspeicher 8 mündet eine Tailgasableitung 21 zur Ableitung von Tailgas aus der $CO_2$-Entfernungsvorrichtung 19b.

Von dem Niederdruckgasspeicher 8 gehen zwei Speichergasausleitungen 23,24 aus. Speichergasausleitung 23 mündet in eine Vorrichtung zur Rohstofftrockung, hier eine Kohletrocknungsanlage 36. Speichergasausleitung 24 mündet in eine Erwärmungsvorrichtung 31 zur Erwärmung von Reduktionsgas. Selbstverständlich könnten eine oder beide Speichergasausleitungen auch von der Speichergaszuleitung 9 ausgehen.

In Strömungsrichtung des Exportgases gesehen vor der Mündung der Shiftdampfzuleitung 16 in die Exportgasabzugsleitung 3 ist in der Exportgasabzugsleitung ein Sättiger 37 vorhanden,

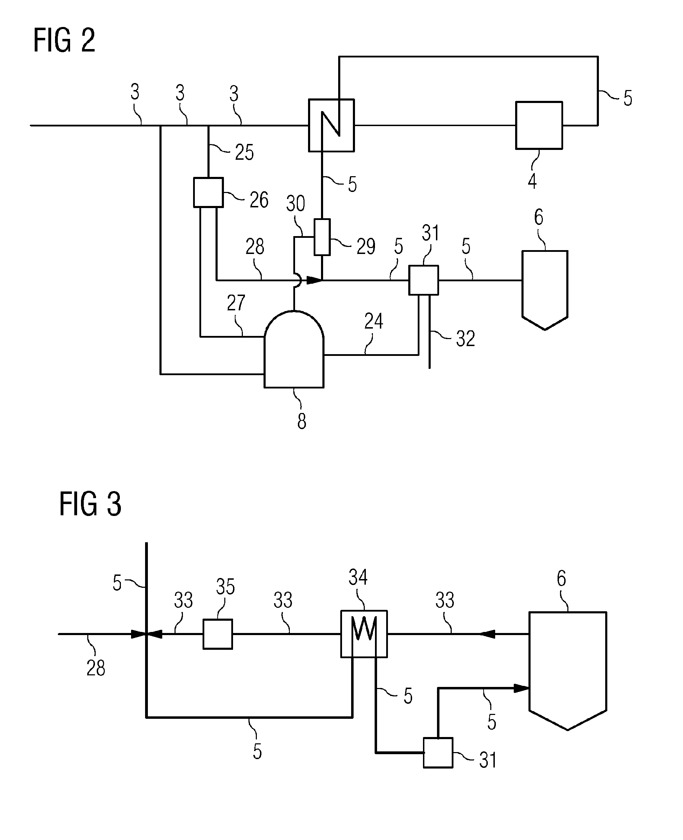

In Figur 2 ist anhand eines Auschnittes einer erfindungsgemäßen Vorrichtung gezeigt, dass von der Exportgasabzugsleitung 3 eine Leitung 25 abzweigt, in der eine $CO_2$-Entfernungsvorrichtung 26 vorhanden ist. Über die Tailgasableitung 27 kann Tailgas von dort in den Niederdruckgasspeicher 8 eingeleitet werden. Das aus der $CO_2$-Entfernungsvorrichtung 26 entnommene $CO_2$-arme Gas wird über Zuspeisleitung 28 in die Shiftgasleitung 5 eingespeist. In der Shiftgasleitung 5 ist eine $CO_2$-Entfernungsvorrichtung 29 vorhanden. Über die Tailgasableitung 30 kann Tailgas von dort in den Niederdruckgasspeicher 8 eingeleitet werden. Es ist dargestellt, das die Zuspeisleitung 28 in Gasströmungsrichtung - Richtung Direktreduktionsanlage 6 - gesehen hinter der $CO_2$-Entfernungsvorrichtung 29 in die Shiftgasleitung 5 mündet. Die vom Niederdruckgasspeicher 8 ausgehende Speichergasausleitung 24 mündet in eine Erwärmungsvorrichtung 31 zur Erwärmung von Reduktionsgas. Über Sauerstoffleitung 32 wird der Erwärmungsvorrichtung sauerstoffhaltiges Gas zwecks Verbrennung von aus dem Niederdruckgasspeicher entnommenem Gas zugeleitet. Auf die Darstellung von Leitungen, die analog zu Figur 1 verlaufen würden, wird aus Gründen der Übersichtlichkeit verzichtet.

In Figur 3 wird anhand eines Auschnittes einer erfindungsgemäßen Vorrichtung dargestellt, wie Topgas aus der Direktreduktionsanlage 6 über die Recyclegasleitung 33 wieder in die Direktreduktionsanlage 6 rezykliert wird, indem es in die Shiftgasleitung 5 mündet. Eine analoge Leitungsführung ist auch in Figur 1 bereits gezeigt. Ebenso dargestellt ist eine zu Figur 2 analoge Mündung einer Zuspeisleitung 28 in die Shiftgasleitung 5. In einer Erwärmungsvorrichtung 31 wird das Reduktionsgas analog zu Figur 2 erwärmt. In Strömungsrichtung gesehen vorher wird es über einen Wärmetauscher 34 in der Recyclegasleitung 33 vorgewärmt. In der Recyclegasleitung 33 ist eine $CO_2$-Entfernungsvorrichtung 35 vorhanden, die aus dem in der Recyclegasleitung 33 geführten Topgas $CO_2$ entfernt, bevor es in Shiftgasleitung 5 eingespeist wird. Es könnte stattdessen auch eine

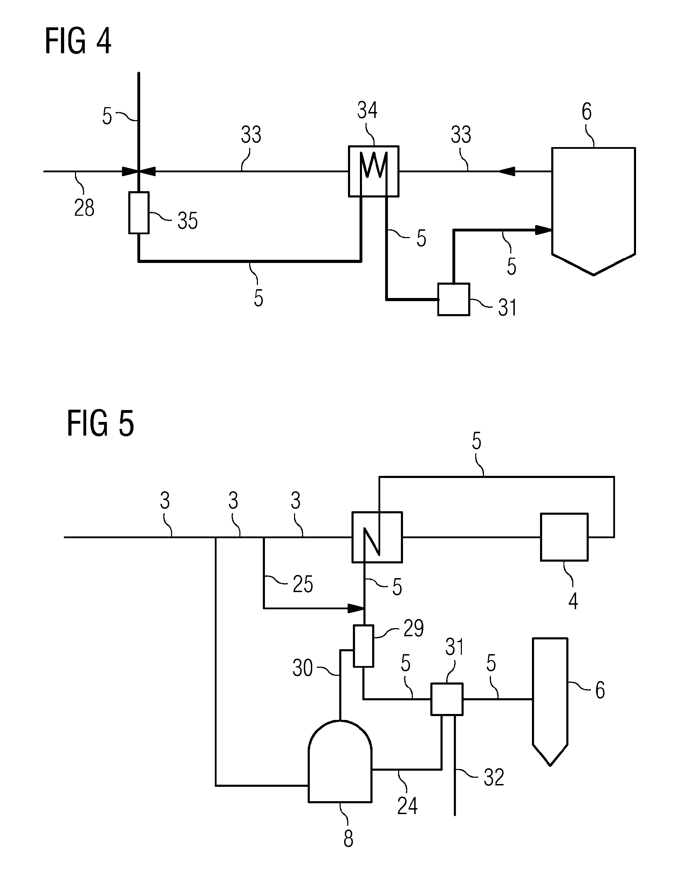

CO$_2$-Entfernungsvorrichtung in Gasströmungsrichtung des Reduktionsgases in Shiftgasleitung 5 gesehen hinter der Mündung der Recyclegasleitung 33 in die Shiftgasleitung 5 vorgesehen sein; das ist in Figur 4 dargestellt.

Figur 5 zeigt eine zu Figur 2 ähnliche Darstellung; im Unterschied zu Figur 2 mündet jedoch die von der Exportgasabzugsleitung 3 abzweigende Leitung 25 vor der CO$_2$-Entfernungsvorrichtung 29 in die Leitung 5. Im Unterschied zu Figur 2 ist in der Leitung 25 keine CO2-Entfernungsvorrichtung vorhanden.

Für den Fachmann ist es selbstverständlich, dass vor CO$_2$-Entfernungsvorrichtungen gegebenenfalls Gaskühler vorhanden sein müssen, um die Temperatur des Gases, aus dem CO$_2$ entfernt werden soll, auf ein für nachfolgende Verfahrensschritte akzeptables Mass zu senken. Auf die Darstellung solcher Gaskühler wurde jedoch aus Gründen der Übersichtlichkeit in den Figuren 1 bis 5 verzichtet.

Ebenso wurde in den Figuren 2 bis 5 aus Gründen der Übersichtlichkeit darauf verzichtet, die Möglichkeit einer Dampfzugabe in Leitung 3 oder in CO-Shift-Reaktor 4 jeweils extra darzustellen; die Möglichkeit besteht grundsätzlich. Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Liste der Bezugszeichen

| | |
|---|---|
| 1 | Anlage zur Herstellung von flüssigem Roheisen |
| 2 | Einschmelzvergaser |
| 3 | Exportgasabzugsleitung |
| 4 | CO- Shift- Reaktor zur Umwandlung von CO und H$_2$O in H$_2$ und CO$_2$, |
| 5 | Shiftgasleitung |
| 6 | Direktreduktionsanlage |
| 7 | Gasspeicherleitung |
| 8 | Niederdruckgasspeicher |
| 9 | Speichergaszuleitung |
| 10 | Dampferzeugungsanlage |
| 11 | Stromdampfzuleitung |
| 12 | Stromerzeugungs- Dampfturbine |
| 13a, 13b | Antriebsdampfzuleitung |
| 14a, 14b | Antriebs- Dampfturbine |
| 15 | Kompressor |
| 16 | Shiftdampfzuleitung |
| 17a, 17b | Dampfzuleitung |
| 18 | Dampfzuleitung |
| 19a, 19b | CO$_2$- Entfernungsvorrichtung |
| 20 | Dampfzuleitung |
| 21 | Tailgasableitung |
| 22 | Topgasableitung |
| 23 | Speichergasausleitung |
| 24 | Speichergasausleitung |
| 25 | Leitung |
| 26 | CO2- Entfernungsvorrichtung |
| 27 | Tailgasableitung |
| 28 | Zuspeisleitung |
| 29 | CO$_2$- Entfernungsvorrichtung |
| 30 | Tailgasableitung |
| 31 | Erwärmungsvorrichtung |
| 32 | Sauerstoffleitung |
| 33 | Recyclegasleitung |
| 34 | Wärmetauscher |
| 35 | CO$_2$- Entfernungsvorrichtung |
| 36 | Kohletrocknungsanlage |
| 37 | Sättiger |
| 38 | Tailgasableitung |

**Patentansprüche**

1. Verfahren zur Herstellung von flüssigem Roheisen und/oder von Eisenschwamm, bei dem

    eine erste Teilmenge eines Exportgases

    einer Anlage zur Herstellung von flüssigem Roheisen (1) als Edukt zur Herstellung eines Reduktionsgases für eine

    Direktreduktionsanlage (6) zur Herstellung von Eisenschwamm verwendet wird, wobei bei dieser Herstellung des Reduktionsgases zumindest teilweise Umwandlung von CO und H$_2$O in H$_2$ und CO$_2$ erfolgt,

    **dadurch gekennzeichnet, dass**

    eine zweite Teilmenge des Exportgases der Anlage zur Herstellung von flüssigem Roheisen (1)

    zumindest zum Teil

    unter Verbrennung mit sauerstoffhaltigem Gas zur Erzeugung von Dampf in einer Dampferzeugungsanlage (10) verwendet wird,

    wobei in der Dampferzeugungsanlage (10) erzeugter Hochdruck-Dampf genutzt wird zur Erfüllung zumindest einer Aufgabe aus der Gruppe von Aufgaben bestehend aus

    - Antrieb zumindest einer Stromerzeugungs-Dampfturbine (12) zur Stromerzeugung,
    - Antrieb von mechanischem Equipment über zumindest eine Antriebs-Dampfturbine (14),
    - Nutzung bei der Umwandlung von CO und H$_2$O in H$_2$ und CO$_2$ bei der Herstellung des Reduktionsgases in zumindest einem CO-Shift-Reaktor (4) durch Erhöhung des Wasserdampfgehaltes;

    und/oder
    wobei in

    - der Dampferzeugungsanlage (10)

    und/oder

    - in Stromerzeugungs-Dampfturbinen (12)

und/oder

- in Antriebs-Dampfturbinen (14)

erzeugter Niederdruck- und/oder Mitteldruck-Dampf genutzt wird zur Erfüllung zumindest einer Aufgabe aus der Gruppe von Aufgaben bestehend aus

- Nutzung bei der Umwandlung von CO und $H_2O$ in $H_2$ und $CO_2$ bei der Herstellung des Reduktionsgases in zumindest einem CO-Shift-Reaktor (4) durch Erhöhung des Wasserdampfgehaltes,
- Nutzung in $CO_2$-Entfernungsanlagen zur Entfernung von $CO_2$ aus bei der Herstellung von Eisenschwamm in der Direktreduktionsanlage verwendeten Gasen.

2.  Verfahren nach Anspruch 1, **dadurch gekennzeichnet, dass** die zweite Teilmenge des Exportgases der Anlage zur Herstellung von flüssigem Roheisen zumindest zum Teil in einem Gasspeicher, bevorzugt einem Niederdruckgasspeicher (8) gesammelt, und aus dem Gasspeicher, bevorzugt dem Niederdruckgasspeicher (8), entnommenes Gas unter Verbrennung mit sauerstoffhaltigem Gas zur Erzeugung von Dampf in der Dampferzeugungsanlage (10) verwendet wird.

3.  Verfahren nach Anspruch 2, **dadurch gekennzeichnet, dass** in den Gasspeicher, bevorzugt Niederdruckgasspeicher (8), auch zumindest ein Gas aus der Gruppe bestehend aus

- Tailgas aus einer der CO2-Entfernungsanlagen zur Entfernung von $CO_2$ aus bei der Herstellung von flüssigem Roheisen in einer Anlage zur Herstellung von flüssigem Roheisen verwendeten Gasen und/oder bei der Herstellung von Eisenschwamm in der Direktreduktionsanlage (6) verwendeten Gasen,
- Topgas aus der Direktreduktionsanlage (6) eingegeben wird.

4.  Verfahren nach einem der Ansprüche 1 bis 2, **dadurch gekennzeichnet, dass** die zweite Teilmenge des Exportgases und/oder in dem Gasspeicher, bevorzugt Niederdruckgasspeicher (8), gespeichertes Gas nach Entnahme aus dem Gasspeicher, bevorzugt Niederdruckgasspeicher (8), genutzt wird zur Erfüllung zumindest einer Aufgabe aus der Gruppe von Aufgaben bestehend aus

- Rohstofftrocknung von bei dem Verfahren eingesetzten Rohstoffen
- Erhitzung des Reduktionsgases durch indirekten Wärmeaustausch nach Verbrennung.

5.  Verfahren nach einem der Ansprüche 1 bis 4, **dadurch gekennzeichnet, dass** Abwärme aus zumindest einer der Wärmeträger aus der Gruppe bestehend aus

- aus dem CO-Shift Reaktor austretendes Gas
- Topgas aus der Direktreduktionsanlage (6);
- bei der Erhitzung des Reduktionsgases durch indirekten Wärmeaustausch bei Verbrennung anfallendes Rauchgas;
- in der zur Durchführung der Direktreduktion eingesetzten Direktreduktionsanlage verwendetes Kühlgas;
- Roheisenerzeugungs-Topgas;
- Generatorgas und/oder Überschussgas der Anlage zur Herstellung von flüssigem Roheisen (1),

genutzt wird zur Erzeugung von Dampf in einer Dampfgewinnungsanlage,
wobei in der Dampfgewinnungsanlage erzeugter Hochdruck-Dampf genutzt wird zur Erfüllung zumindest einer Aufgabe aus der Gruppe von Aufgaben bestehend aus

- Antrieb zumindest einer Stromerzeugungs-Dampfturbine (12) zur Stromerzeugung,
- Antrieb von mechanischem Equipment über zumindest eine Antriebs-Dampfturbine (14),
- Nutzung bei der Umwandlung von CO und $H_2O$ in $H_2$ und $CO_2$ bei der Herstellung des Reduktionsgases in zumindest einem CO-Shift-Reaktor (4) durch Erhöhung des Wasserdampfgehaltes;

und/oder
wobei in der Dampfgewinnungsanlage erzeugter Niederdruck- und/oder Mitteldruck-Dampf genutzt wird zur Erfüllung zumindest einer Aufgabe aus der Gruppe von Aufgaben bestehend aus

- Nutzung bei der Umwandlung von CO und $H_2O$ in $H_2$ und $CO_2$ bei der Herstellung des Reduktionsgases in zumindest einem CO-Shift-Reaktor (4) durch Erhöhung des Wasserdampfgehaltes,
- Nutzung in $CO_2$-Entfernungsanlagen zur Entfernung von $CO_2$ aus bei der Herstellung von Eisenschwamm in der Direktreduktionsanlage (6) verwendeten Gasen.

6.  Vorrichtung zur Durchführung eines Verfahrens nach einem der Ansprüche 1- 5, mit einer Anlage zur Herstellung von flüssigem Roheisen (1), einer Exportgasabzugsleitung (3) zum Abzug von Exportgas aus der Anlage zur Herstellung von flüssigem Roheisen (1), zumindest einem CO- Shift- Reaktor (4) zur Um-

wandlung von CO und $H_2O$ in $H_2$ und $CO_2$, in welchen die Exportgasabzugsleitung (3) mündet,
einer Direktreduktionsanlage (6) zur Herstellung von Eisenschwamm,
eine von dem zumindest einen CO- Shift- Reaktor (4) ausgehende Shiftgasleitung (5) zur Zuleitung von Shiftgas zur Direktreduktionsanlage (6),
**dadurch gekennzeichnet, dass** sie umfasst
eine von der Exportgasabzugsleitung (3) abzweigende und in eine Dampferzeugungsanlage (10) mündende Dampfexportgaszuleitung zur Zuleitung von Exportgas in die Dampferzeugungsanlage (10),
wobei von der Dampferzeugungsanlage (10) zumindest ein Mitglied der Gruppe bestehend aus:

- Stromdampfzuleitung (11) zur Zuleitung von Dampf in eine Stromerzeugungs- Dampfturbine (12),
- Antriebsdampfzuleitung (13) zur Zuleitung von Dampf in eine Antriebs-Dampfturbine (14),
- Shiftdampfzuleitung (16) zur Zuleitung von Dampf in einen CO-Shift-Reaktor (4) und/oder in die Exportgasabzugsleitung (3),

ausgeht,
und/oder wobei
von zumindest einem Mitglied der Gruppe bestehend aus

- Dampferzeugungsanlage (10),
- Stromerzeugungs-Dampfturbine (12),
- Antriebs-Dampfturbine (14),

eine
in einen CO-Shift-Reaktor (4) und/oder in die Exportgasabzugsleitung (3), und/oder
in eine $CO_2$-Entfernungsvorrichtung (19b) zur Entfernung von $CO_2$ aus bei der Herstellung von Eisenschwamm in der Direktreduktionsanlage verwendeten Gasen
mündende
Dampfzuleitung (20) ausgeht.

7. Vorrichtung nach Anspruch 6, **dadurch gekennzeichnet, dass** die erfindungsgemäße Vorrichtung einen Gasspeicher, bevorzugt einen Niederdruckgasspeicher (8), in der Dampfexportgaszuleitung umfasst.

8. Vorrichtung nach Anspruch 7, **dadurch gekennzeichnet, dass** mündet in den Gasspeicher, bevorzugt Niederdruckgasspeicher (8), zumindest ein Mitglied der Gruppe bestehend aus

- Tailgasableitung (21) zur Ableitung von Tailgas aus der $CO_2$-Entfernungsvorrichtung (19b) zur Entfernung von $CO_2$,
- Topgasableitung (22) zur Ableitung von Topgas aus der Direktreduktionsanlage (6).

9. Vorrichtung nach Anspruch 7 oder 8, **dadurch gekennzeichnet, dass** von dem Gasspeicher, bevorzugt Niederdruckgasspeicher (8), zumindest eine Speichergasausleitung (23) ausgeht, die in mindestens ein Mitglied aus der Gruppe

- Vorrichtung zur Rohstofftrocknung,
- Erwärmungsvorrichtung (31) zur Erwärmung von Reduktionsgas mündet.

10. Vorrichtung nach einem der Ansprüche 6 bis 9, **dadurch gekennzeichnet, dass** sie umfasst
zumindest eine Dampfgewinnungsanlage zur Erzeugung von Dampf aus Wärme von zumindest einem der Wärmeträger aus der Gruppe bestehend aus

- aus dem CO-Shift Reaktor (4) austretendes Gas
- Topgas aus der Direktreduktionsanlage (6);
- bei der Erhitzung des Reduktionsgases durch indirekten Wärmeaustausch bei Verbrennung anfallendes Rauchgas;
- in der zur Durchführung der Direktreduktion eingesetzten Direktreduktionsanlage (6) verwendetes Kühlgas;
- Roheisenerzeugungs-Topgas;
- Generatorgas und/oder Überschussgas der Anlage zur Herstellung von flüssigem Roheisen (1),

wobei von der zumindest einen Dampfgewinnungsanlage
zumindest ein Mitglied der Gruppe bestehend aus:

- Stromdampfzuleitung (11) zur Zuleitung von Dampf in eine Stromerzeugungs-Dampfturbine (12),
- Antriebsdampfzuleitung (13) zur Zuleitung von Dampf in eine Antriebs-Dampfturbine (14),
- Shiftdampfzuleitung (16) zur Zuleitung von Dampf in einen CO-Shift-Reaktor (4) und/oder in die Exportgasabzugsleitung (3),

ausgeht,
und/oder wobei
von der Dampfgewinnungsanlage
eine
in einen CO-Shift-Reaktor (4) und/oder in die Exportgasabzugsleitung (3), und/oder
in eine $CO_2$-Entfernungsvorrichtung (19a,19b) zur Entfernung von $CO_2$ aus bei der Herstellung von Eisenschwamm in der Direktreduktionsanlage verwendeten Gasen
mündende
Dampfzuleitung (20) ausgeht.

FIG 1

FIG 2

FIG 3

FIG 4

FIG 5

<table>
<tr><td rowspan="2">
Europäisches<br>Patentamt<br>European<br>Patent Office<br>Office européen<br>des brevets
</td><td rowspan="2" align="center">**EUROPÄISCHER RECHERCHENBERICHT**</td><td>**Nummer der Anmeldung**</td></tr>
<tr><td>EP 12 16 3953</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2010/079050 A1 (SIEMENS VAI METALS TECH GMBH [AT]; MILLNER ROBERT [AT]) 15. Juli 2010 (2010-07-15) * Zusammenfassung * * Abbildung 2 * * Seite 16 - Absatz 3 * * Seite 18 - Absatz 4 * ----- | 1-10 | INV. C21B13/14 C21B13/00 |
| Y | WO 2010/057767 A1 (SIEMENS VAI METALS TECH GMBH [AT]; MILLNER ROBERT [AT]) 27. Mai 2010 (2010-05-27) * Zusammenfassung * * Abbildung 2 * * Seite 13 - Absatz 2 * ----- | 1-10 | |
| A | US 5 958 107 A (GREENWALT RICHARD B [US]) 28. September 1999 (1999-09-28) * Zusammenfassung * * Abbildung 2 * ----- | 1-10 | |
| | | | RECHERCHIERTE SACHGEBIETE (IPC) C21B |

Der vorliegende Recherchenbericht wurde für alle Patentansprüche erstellt

| Recherchenort | Abschlußdatum der Recherche | Prüfer |
|---|---|---|
| Den Haag | 11. September 2012 | Gimeno-Fabra, Lluis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 16 3953

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2012

| Im Recherchenbericht angeführtes Patentdokument | Datum der Veröffentlichung | Mitglied(er) der Patentfamilie | Datum der Veröffentlichung |
|---|---|---|---|
| WO 2010079050 A1 | 15-07-2010 | AR 075125 A1<br>AT 507713 A1<br>TW 201033371 A<br>WO 2010079050 A1 | 09-03-2011<br>15-07-2010<br>16-09-2010<br>15-07-2010 |
| WO 2010057767 A1 | 27-05-2010 | AR 074367 A1<br>AT 507632 A1<br>AU 2009317452 A1<br>CA 2744280 A1<br>CN 102256894 A<br>EP 2356067 A1<br>JP 2012509456 A<br>KR 20110097875 A<br>TW 201026601 A<br>US 2011284800 A1<br>WO 2010057767 A1 | 12-01-2011<br>15-06-2010<br>27-05-2010<br>27-05-2010<br>23-11-2011<br>17-08-2011<br>19-04-2012<br>31-08-2011<br>16-07-2010<br>24-11-2011<br>27-05-2010 |
| US 5958107 A | 28-09-1999 | KEINE | |

EPO FORM P0461

Für nähere Einzelheiten zu diesem Anhang : siehe Amtsblatt des Europäischen Patentamts, Nr.12/82